# EUROPEAN PATENT APPLICATION

(11) **EP 3 543 868 A1**
(43) Date of publication of application: **25.09.2019**
(21) Application number: 19164175.2
(22) Date of filing: 20.03.2019
(51) Int. Cl.: G06F 16/332

(54) **ANONYMOUS CHAT METHOD AND SYSTEM INCORPORATING MACHINE-LEARNING CAPABILITIES**

(30) Priority: 22.03.2018 IN 201811010582
(71) Applicant: Carrier Corporation, Palm Beach Gardens, FL 33418 (US)
(72) Inventor: NALLAPERUMAL, Pirammanayagam, Telangana, 500 081 (IN); KUENZI, Adam, Salem, OR 97302-1142 (US); GOVINDAVARAM, Srikanth, Telangana, 500 081 (IN)
(74) Representative: Dehns

(57) **Abstract**

A method (100) and system (200) for facilitating anonymous and automated communication is disclosed. A method (100) includes receiving a query request from a guest (102); authenticating the guest (104); receiving a query from the guest (106); analyzing a knowledge base (110) based on the query; returning a response to the query based on analyzing the knowledge base, in the event that the query can be answered from the knowledge base; and facilitating anonymous communication between the guest and an answerer, in the event that the query cannot be answered from the knowledge base.

## Description

### BACKGROUND

Exemplary embodiments pertain to the art of electronics. In particular, the present disclosure relates to a method and system for providing an anonymous chat method and system with machine-learning capabilities.

There are often times when a person would like information that can best be provided by specific individuals. However, those individuals providing the information might not want their contact information to be publicized.

### BRIEF DESCRIPTION

The present invention provides a method and system for facilitating anonymous and automated communication. The method includes receiving a query request from a guest; authenticating the guest; receiving a query from the guest; analyzing a knowledge base based on the query; returning a response to the query based on analyzing the knowledge base, in the event that the query can be answered from the knowledge base; and facilitating anonymous communication between the guest and an answerer, in the event that the query cannot be answered from the knowledge base.

In addition to one or more features described above, or as an alternative, further embodiments may include wherein authenticating the guest comprises determining a subject of the query request.

In addition to features described above, or as an alternative, further embodiments may include wherein determining the subject of the query request comprises receiving a code from the guest.

In addition to features described above, or as an alternative, further embodiments may include the code is a machine-readable visual code; and receiving the code comprises receiving an image of the visual code.

In addition to features described above, or as an alternative, further embodiments may include the visual code is chosen from a bar code and a two-dimensional bar code.

In addition to features described above, or as an alternative, further embodiments may include wherein the code is an electromagnetic signal.

In addition to features described above, or as an alternative, further embodiments may include wherein authenticating the guest comprises determining a location of the guest.

In addition to features described above, or as an alternative, further embodiments may include analyzing the knowledge base based on the query comprising: using machine-learning methods to determine a context of the query; and using machine-learning methods to determine if an answer exists in the knowledge base

In addition to features described above, or as an alternative, further embodiments may include wherein returning a response to the query based on analyzing the knowledge base further comprises sending the response to the answerer for approval prior to returning the response.

In addition to features described above, or as an alternative, further embodiments may include wherein facilitating anonymous communication between the guest and the answerer comprises creating a real-time chat session between the guest and the answerer.

In addition to features described above, or as an alternative, further embodiments may include wherein facilitating anonymous communication between the guest and the answerer comprises creating a voice communication session between the guest and the answerer.

In addition to features described above, or as an alternative, further embodiments may include wherein the voice communication session further includes video communication.

In an aspect there is provided a computer system for facilitating anonymous and automated communication comprising: a processor; a memory; computer program instructions configured to cause the processor to perform the following method: receiving a query request from a guest; authenticating the guest; receiving a query from the guest; analyzing a knowledge base based on the query; returning a response to the query based on analyzing the knowledge base, in the event that the query can be answered from the knowledge base; and facilitating anonymous communication between the guest and an answerer, in the event that the query cannot be answered from the knowledge base.

### BRIEF DESCRIPTION OF THE DRAWINGS

The following descriptions should not be considered limiting but are provided by way of example only. With reference to the accompanying drawings, like elements are numbered alike:
FIG. 1 is a flowchart illustrating the operation of one or more embodiments;
FIG. 2 is a block diagram of a computer system capable of performing one or more embodiments; and
FIG. 3 is a block diagram of an exemplary computer program product.

### DETAILED DESCRIPTION

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described above, there are situations in which a person desires information that can best be provided by specific individuals. For example, in the area of real estate, a landlord, property manager, or homeowner often knows or has ready access to specific information that could be of great use to a guest. For example, a person renting a location such as a house, apartment, hotel room, etc. might want to know restaurant, and the like). A person renting a location might want to know specifics of the location, such as where the towels are located, how to operate the television, where the ice machine is located, and the like. A prospective home buyer might be interested in information such as the location of local school districts, shopping centers, and the like. While one may be able to receive general information from the internet, such specific information might not be available.

In a commercial establishment, such information might be handled by a concierge or other front-desk employee. In a smaller establishment, such as an open house, vacation rental, and the like, there might not be dedicated personnel available to provide such answers. A solution would be for a person such as a homeowner, landlord, property manager, real estate agent, or the like to provide their contact information so that they can answer such questions. However, a homeowner, landlord, property manager, or real estate agent might not want to have their contact information made available to every renter or prospective customer. In addition, a homeowner, landlord, property manager, or real estate agent might tire of having to answer the same question repeatedly.

In one or more embodiments, a communication connection can be established between a person asking a question (hereinafter referred to as a "guest") and a designated answerer. The communication connection can be via audio, video, or text. In such a manner, the designated answerer does not need to divulge his contact information, yet is still able to provide answers to questions. In addition, a machine-learning mechanism can be used. If a question has been previously asked and answered, a previous answer can be provided without requiring input from the designated answerer.

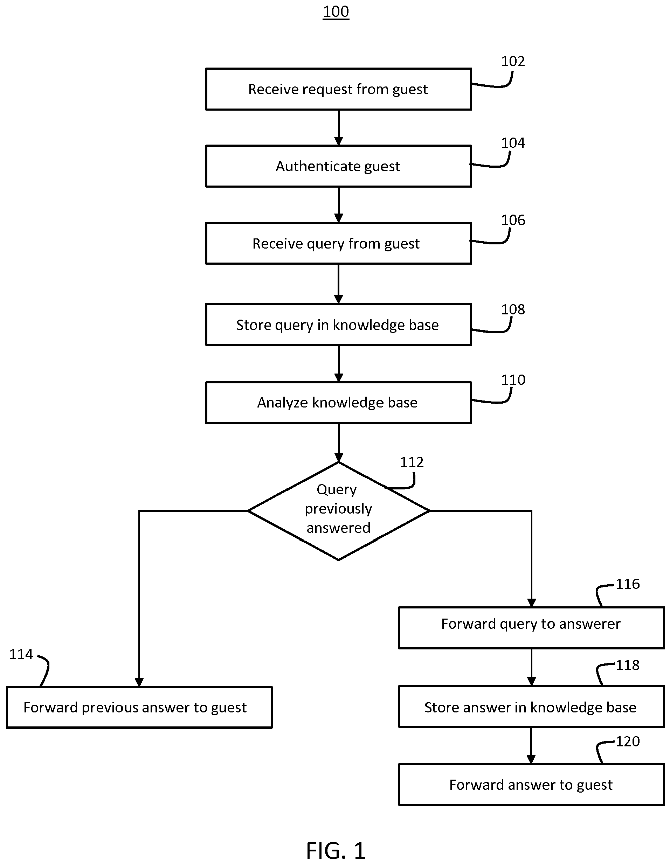

With respect to FIG. 1, a method 100 is presented that illustrates the operation of one or more embodiments. Method 100 is merely exemplary and is not limited to the embodiments presented herein. Method 100 can be employed in many different embodiments or examples not specifically depicted or described herein. In some embodiments, the procedures, processes, and/or activities of method 100 can be performed in the order presented. In other embodiments, one or more of the procedures, processes, and/or activities of method 100 can be combined, skipped, or performed in a different order. In some embodiments, method 100 can be executed by a system 200, using a computer program product 300. System 200 can be remotely located from the guest and the answerer.

In an embodiment a query request is received from a guest (block 102). This can occur in one of a variety of different manners. In one or more embodiments, the guest has a software application (sometimes referred to as an "app"), such as one executable on a mobile electronic device, such as a smartphone, smart watch, MP3 player, personal digital assistant, e-reader, tablet, laptop computer, and the like.

The guest is then authenticated (block 104). Using this data, the query can be forwarded to the correct answerer.

Authenticating the guest can be accomplished in one of a variety of different manners. In some embodiments, a code can be entered by the guest to indicate the location. The code can be a unique identifier. In such a manner, an embodiment executing method 100 can provide services for multiple locations, with each query being forwarded to the answerer associated with the location. The code can be a numeric or alphanumeric code associated with the location. This can be useful for a house advertised for sale. The code can be listed on a sign in front of the house. A prospective buyer can enter in the code and have his queries answered.

In some embodiments, a code from a separate device can be used for authentication purposes. For example, in some real estate sales situations, a lock box can be used. The lock box contains a key to the real estate being sold. A real estate agent who lists the house places a key to the real estate location in the lock box. A real estate agent showing the house to a prospective buyer can open the lock box to gain access to the key. In some instances, the lock box is electronic and can be opened through the use of a code or through the use of an app. The code used to open the lock box could be the code used to confirm the location. In some embodiments, the lock box can wirelessly transmit a signal, such as a beacon transmitted via Bluetooth or other wireless protocol. The wireless signal is then used to authenticate the user.

In some embodiments, the code can be a visual machine-readable code, such as a bar code or a 2-dimensional bar code (such as a quick response (QR) code). With a visual machine-readable code, a guest can use a camera or scanner to read a code associated with the location. The guest can then transmit the information via the application. The machine-readable code also can include machine-readable information that is an electromagnetic signal, such as a radio frequency identifier (RFID), near-field communication (NFC), and the like. An RFID or NFC "tag" that is placed at the location can be read by a guest's mobile electronic device to identify the location to which the query pertains.

A scannable code can be useful in situations in which the guest has access to a secured area. For example, the guest can be a tenant in a vacation rental, bed and breakfast, hotel, or the like. The scannable code can be placed at a visible location within the vacation rental, bed and breakfast, or hotel room, such that the guest can have his queries about the vacation rental answered. The guest can be a prospective home buyer and the scannable code can be placed inside the home that is for sale.

In one or more embodiments, navigation systems can be used to authenticate the user and/or determine the location to which the query pertains. Exemplary navigation systems can include global positioning system (GPS), global navigation system (GLONASS), an indoor positioning system (IPS), and the like. The positioning system can provide location coordinates to an embodiment. This can occur automatically, such as the guest's mobile electronic device retrieving location data from a GPS reader embodied within the mobile electronic device. Thereafter, the location coordinates can be correlated to the correct answerer. For example, if the guest is determined to be at a location that correlates to an answerer, the guest's query is forwarded to the answerer.

While the above has described authenticating the guest's location, some embodiments can perform an authentication of the guest's identity in addition to or instead of authenticating the guest's location. A variety of different methods can be used to authenticate the guest's identity. For example, biometrics (the use of a guest's physical features, such as a retinal scan, fingerprint scan, facial recognition, and the like) can confirm the identity of the guest. The biometrics can be gathered through the use of a guest's mobile electronic device. In some embodiments, passwords, account credentials, and the like can be used to authenticate identity. In some embodiments, an authentication code can be sent to a guest's mobile electronic device. During a reservation step, the guest can include a phone number or email address that would enable the sending of an authentication code to the guest's mobile electronic device. The guest would enter the authentication code during this step to authenticate his identity. In addition, third-party applications can be used to perform identity authentication. For example, a Google ID or Facebook ID could be used to perform the identity authentication. In such a manner, the authentication is handled by the third-party identification provider, but the responder would authorize the guest to participate in the service based on their stay, interests, and the like.

In some embodiments, once a guest has been authenticated once, the guest can remain authenticated for a period of time. For example, in a vacation rental situation, the guest may check-in to the rental at a certain time and have a check-out time at a certain time in the future. One the guest has been confirmed using one of the methods described above, that guest can remain confirmed until the check-out time. The guest would be able to use chat feature without authentication until check-out.

Thereafter, a query is received from the guest (block 106). The query can be received in one of a variety of different manners. In some embodiments, the query can be text-based. In such a manner, the query is submitted in a written format, and then forwarded to an answerer.

In some embodiments, the query can be voice-based. The guest can use a microphone of his mobile electronic device to record his query. The query can then be stored and transmitted to the answerer.

In some embodiments, the answerer can elect to respond via a real-time voice communication. For example, the answerer's phone (such as a landline, voice over IP (VOIP) program, or smartphone) could then be used to complete a connection with the guest. In some embodiments, the connection can be via an application being used by the answerer. The application can have a voice component that allows the answerer to be placed in a real-time communication connection with the guest.

In some embodiments, the query can include both an audio and a visual component. In such an embodiment, the camera and microphone of the guest's mobile electronic device can be used to capture audio and video information. The audio and video information can be digitized and transmitted to the answerer. Thereafter, an application on the answerer's computer or mobile electronic device can display the audio and video information to the answerer. In a similar manner, audio and video information can be transmitted from the answerer to the guest.

The query can be stored in a knowledge base (block 108). While this process can be more easily accomplished with text-based connections, audio and audio-visual communications also can be analyzed, using techniques such as natural-language processing and video analytics, and stored.

An analysis can be performed of the knowledge base in a machine-learning manner (block 110) to determine if the query has been previously answered (block 112). Machine-learning techniques can be used to determine the query being asked and to determine if the answer exists in the knowledge base. In a typical machine-learning algorithm, a computer system has the ability to progressively improve performance. This is typically performed by examining outputs based on various inputs to determine the effect of input on the outputs. Thereafter, the algorithm adjusts the processing of the inputs to result in desired outputs. The query and answer can be stored in the knowledge base.

For example, when the guest types in his query, the knowledge base can be consulted to determine if the query is stored in the knowledge base, along with the response to the query. In such an instance, the answerer might not be contacted and the response is sent to the guest (block 114). In some embodiments, an answerer can be presented with the option to approve an answer generated by the machine-learning algorithm before the answer is sent to the guest. Such a step could prevent the inadvertent dissemination of incorrect information to the guest. The corrected response can be stored in the knowledge base and used to fine-tune the automated responses from the machine-learning engine. The machine-learning algorithm can use natural language processing to determine if the response is appropriate and even re-phrase parts of the response to more match the way the guest asked the question. Additionally, if the same question has been asked several ways and the same response has been provided, the machine generated result could be provided to the answerer with a confidence score. For an unanswered question, the confidence score could be quite low. For a generated result from previous answers that had only been used a few times, the confidence score could be medium. For a generated result based upon many similar answers, the confidence score could be high. In the case of high confidence score, the answer could be provided automatically.

For example, the guest may ask "what is the Wi-Fi network identifier and password?" If the query and response is already in the knowledge base, the response can be immediately forwarded to the guest. This can occur even in response to a query that is asked via audio. The response can be sent to the guest in a text format. In some embodiments, the response can be read aloud to the guest. The voice being used can be a recording made by the answerer, or it could use speech synthesis technology to artificially produce human speech.

In some responses, if an answer cannot be found in the knowledge base, an indication can be sent to the guest that an answer to the query is being researched. Thereafter, the query can be sent to an answerer (block 116). Thereafter, anonymous communication between the guest and answerer can be facilitated.

For a particular location, there can be one or more people who are designated answerers. In some embodiments, there can be a hierarchy of answerers, in which the query gets forward to a first person in the hierarchy, and then gets forwarded to a second person in the hierarchy if the first person is not available, and so on. For example, a homeowner can be the first person in the hierarchy. Then a trusted agent of the homeowner (such as a real estate agent) can be the second person in the hierarchy. The third person in the hierarchy can be a person who works with the real estate agent. The fourth person in the hierarchy can be a trusted neighbor.

In some embodiments, the answerer can set up availability times. For example, the answerer might state that he is available for a particular time. During other time periods, another person in the hierarchy could become the designated answer. The answerer might also establish time periods during which only automated responses are generated, to avoid being disturbed in the middle of the night or while at work.

The answerer can receive the query via short message system (SMS), via email, or via an application being used by the answerer. The application could include real-time chat capabilities. In such a situation, the communication between the guest and the answerer might be anonymous. Neither party needs to disclose their contact information to the other party. A homeowner who is renting his house to a different person every week might not want every single guest to have his name and phone number. Similarly, a guest who is visiting a place he may never be in the future might not want to have his contact information made available to others.

The answerer creates an answer that is stored in the knowledge base (block 118). The answer is then forwarded to the guest (block 120).

In some embodiments, a real-time communication (such as a chat session) can be initiated between the answerer and the guest. The real-time communication can occur in one of a variety of different manners, both those currently known and those developed in the future. For example, a chat window can be opened in the guest's mobile electronic device. The guest can enter in text to be sent to the answerer in a real-time manner. The answerer could have similar capabilities in his own mobile electronic device. The communication can be anonymous in that the identities of the guest and the answerer need not be revealed to the other party of the communication.

The real-time communication can be text-based, voice-based, or include both audio and visual components. During the real-time communication, the communication can be stored or summarized in the knowledge base.

In some embodiments, an answerer can pre-load a knowledge base of an embodiment with answers to possible queries. There are a wide variety of possible queries and responses that can be pre-loaded. Regarding a house (or car) that is for sale, the answerer can learn what queries are commonly asked (e.g., how old is the house/car, what are the schools, do the washer/dryer stay with the house, where is the nearest grocery store, what is a typical electric bill, is there a homeowners association, etc.). A different set of queries may be more common for short-term rental properties (e.g., where are the cleaning supplies, what is the Wi-Fi login and password, how to operate the entertainment center, etc.). In addition, there can be classes of queries. Some queries can be "private" in that they are for authenticated guests only, such as the exemplary Wi-Fi information. But other queries can be flagged as "public." The public queries can be accessible by potential guests or otherwise unauthenticated guests. In such a manner, a potential guest can find out more information about the location of a short-term rental property (such as proximity to popular tourist attractions) to determine if they want to rent that location.

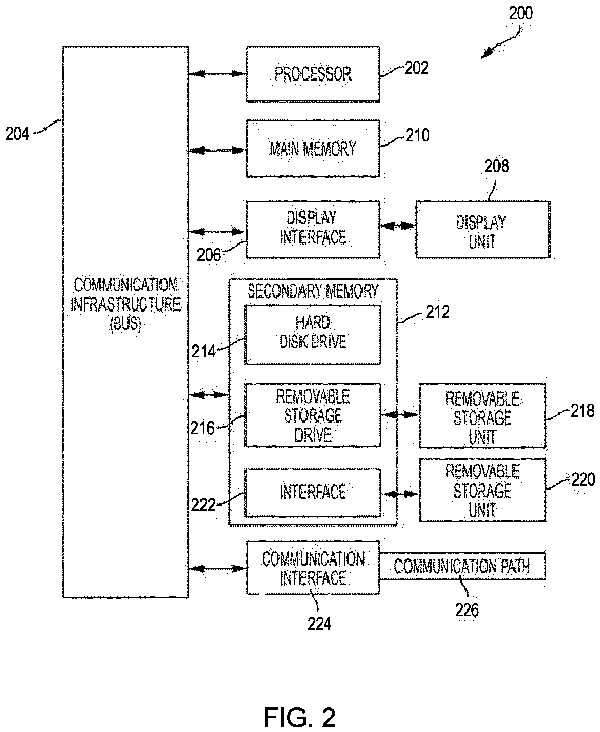

FIG. 2 depicts a high-level block diagram of a computer system 200, which can be used to implement one or more embodiments. More specifically, computer system 200 can be used to implement hardware components of systems capable of performing methods described herein. Although one exemplary computer system 200 is shown, computer system 200 includes a communication path 226, which connects computer system 200 to additional systems (not depicted) and can include one or more wide area networks (WANs) and/or local area networks (LANs) such as the Internet, intranet(s), and/or wireless communication network(s). Computer system 200 and additional system are in communication via communication path 226, e.g., to communicate data between them.

Computer system 200 includes one or more processors, such as processor 202. Processor 202 is connected to a communication infrastructure 204 (e.g., a communications bus, cross-over bar, or network). Computer system 200 can include a display interface 206 that forwards graphics, textual content, and other data from communication infrastructure 204 (or from a frame buffer not shown) for display on a display unit 208. Computer system 200 also includes a main memory 210, preferably random access memory (RAM), and can also include a secondary memory 212. Secondary memory 212 can include, for example, a hard disk drive 214 and/or a removable storage drive 216, representing, for example, a floppy disk drive, a magnetic tape drive, or an optical disc drive. Hard disk drive 214 can be in the form of a solid state drive (SSD), a traditional magnetic disk drive, or a hybrid of the two. There also can be more than one hard disk drive 214 contained within secondary memory 212. Removable storage drive 216 reads from and/or writes to a removable storage unit 218 in a manner well known to those having ordinary skill in the art. Removable storage unit 218 represents, for example, a floppy disk, a compact disc, a magnetic tape, or an optical disc, etc. which is read by and written to by removable storage drive 216. As will be appreciated, removable storage unit 218 includes a computer-readable medium having stored therein computer software and/ or data.

In alternative embodiments, secondary memory 212 can include other similar means for allowing computer programs or other instructions to be loaded into the computer system. Such means can include, for example, a removable storage unit 220 and an interface 222. Examples of such means can include a program package and package interface (such as that found in video game devices), a removable memory chip (such as an EPROM, secure digital card (SD card), compact flash card (CF card), universal serial bus (USB) memory, or PROM) and associated socket, and other removable storage units 220 and interfaces 222 which allow software and data to be transferred from the removable storage unit 220 to computer system 200.

Computer system 200 can also include a communications interface 224. Communications interface 224 allows software and data to be transferred between the computer system and external devices. Examples of communications interface 224 can include a modem, a network interface (such as an Ethernet card), a communications port, or a PC card slot and card, a universal serial bus port (USB), and the like. Software and data transferred via communications interface 224 are in the form of signals that can be, for example, electronic, electromagnetic, optical, or other signals capable of being received by communications interface 224. These signals are provided to communications interface 224 via communication path (i.e., channel) 226. Communication path 226 carries signals and can be implemented using wire or cable, fiber optics, a phone line, a cellular phone link, an RF link, and/or other communications channels.

In the present description, the terms "computer program medium," "computer usable medium," and "computer-readable medium" are used to refer to media such as main memory 210 and secondary memory 212, removable storage drive 216, and a hard disk installed in hard disk drive 214. Computer programs (also called computer control logic) are stored in main memory 210 and/or secondary memory 212. Computer programs also can be received via communications interface 224. Such computer programs, when run, enable the computer system to perform the features discussed herein. In particular, the computer programs, when run, enable processor 202 to perform the features of the computer system. Accordingly, such computer programs represent controllers of the computer system. Thus it can be seen from the forgoing detailed description that one or more embodiments provide technical benefits and advantages.

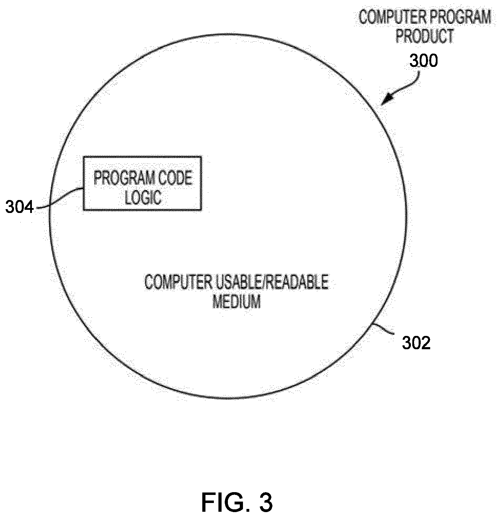

Referring now to FIG. 3, a computer program product 300 in accordance with an embodiment that includes a computer-readable storage medium 302 and program instructions 304 is generally shown.

Embodiments can be a system, a method, and/or a computer program product. The computer program product can include a computer-readable storage medium (or media) having computer-readable program instructions thereon for causing a processor to carry out aspects of embodiments of the present invention.

The computer-readable storage medium can be a tangible device that can retain and store instructions for use by an instruction execution device. The computer-readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out embodiments can include assembler instructions, instruction-set-architecture (ISA) instructions, machine instructions, machine dependent instructions, microcode, firmware instructions, state-setting data, or either source code or object code written in any combination of one or more programming languages, including an object-oriented programming language such as Smalltalk, C++ or the like, and conventional procedural programming languages, such as the "C" programming language or similar programming languages. The computer-readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer-readable program instructions by utilizing state information of the computer-readable program instructions to personalize the electronic circuitry, in order to perform embodiments of the present invention.

Embodiments may be implemented using one or more technologies. In some embodiments, an apparatus or system may include one or more processors and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present disclosure, but that the present invention will include all embodiments falling within the scope of the claims.

## Claims

1. A computer-implemented method (100) for facilitating anonymous and automated communication comprising:
receiving a query request from a guest (102);
authenticating the guest (104);
receiving a query from the guest (106);
analyzing a knowledge base (110) based on the query;
returning a response to the query based on analyzing the knowledge base, in the event that the query can be answered from the knowledge base; and
facilitating anonymous communication between the guest and an answerer, in the event that the query cannot be answered from the knowledge base.

2. The computer-implemented method of claim 1, wherein:
authenticating the guest (104) comprises determining a subject of the query request, and/or
authenticating the guest (104) comprises determining a location of the guest.

3. The computer-implemented method of claim 2, wherein:
determining the subject of the query request comprises receiving a code from the guest.

4. The computer-implemented method of claim 3, wherein:
the code is a machine-readable visual code; and
receiving the code comprises receiving an image of the visual code, optionally wherein
the visual code is chosen from a bar code and a two-dimensional bar code.

5. The computer-implemented method of claim 3, wherein:
the code is an electromagnetic signal.

6. The computer-implemented method of any preceding claim, wherein:
analyzing the knowledge base (110) based on the query comprises:
using machine-learning methods to determine a context of the query; and
using machine-learning methods to determine if an answer exists in the knowledge base.

7. The computer-implemented method of any preceding claim, wherein:
returning a response to the query based on analyzing the knowledge base (110) further comprises sending the response to the answerer for approval prior to returning the response.

8. The computer-implemented method of any preceding claim, wherein:
facilitating anonymous communication between the guest and the answerer comprises creating a real-time chat session between the guest and the answerer.

9. The computer-implemented method of any preceding claim, wherein:
facilitating anonymous communication between the guest and the answerer comprises creating a voice communication session between the guest and the answerer, optionally wherein
the voice communication session further includes video communication.

10. A computer system (200) for facilitating anonymous and automated communication comprising:
a processor (202);
a memory (210);
computer program instructions (304) configured to cause the processor to perform the following method:
receiving a query request from a guest (102);
authenticating the guest (104);
receiving a query from the guest (106);
analyzing a knowledge base (110) based on the query;
returning a response to the query based on analyzing the knowledge base, in the event that the query can be answered from the knowledge base; and
facilitating anonymous communication between the guest and an answerer, in the event that the query cannot be answered from the knowledge base.

11. The computer system of claim 10, wherein:
authenticating the guest (104) comprises determining a subject of the query request, and/or
authenticating the guest comprises determining a location of the guest.

12. The computer system of claim 11, wherein:
determining the subject of the query request comprises receiving a code from the guest.

13. The computer system of claim 12, wherein:
the code is a machine-readable visual code; and
receiving the code comprises receiving an image of the visual code, optionally wherein
the visual code is chosen from a bar code and a two-dimensional bar code.

14. The computer system of any of claims 10 to 13, wherein:
analyzing the knowledge base (110) based on the query comprises:
using machine-learning methods to determine a context of the query; and
using machine-learning methods to determine if an answer exists in the knowledge base.

15. The computer system of any of claims 10 to 14, wherein:
returning a response to the query based on analyzing the knowledge base (110) further comprises sending the response to the answerer for approval prior to returning the response.
